(19) Europäisches Patentamt
European Patent Office
Office européen des brevets

(11) EP 0 540 295 B1

(12) EUROPEAN PATENT SPECIFICATION

(45) Date of publication and mention of the grant of the patent: **10.09.1997 Bulletin 1997/37**

(51) Int Cl.6: **G03C 1/26**, C09B 23/00

(21) Application number: **92309834.7**

(22) Date of filing: **27.10.1992**

# (54) Silver halide photographic light-sensitive material

Fotografisches, lichtempfindliches Silberhalogenidmaterial

Matériau photographique sensible à la lumière à l'halogénure d'argent

(84) Designated Contracting States:
**DE FR GB IT**

(30) Priority: **29.10.1991 JP 283005/91**

(43) Date of publication of application:
**05.05.1993 Bulletin 1993/18**

(73) Proprietor: **KONICA CORPORATION**
**Tokyo 163 (JP)**

(72) Inventors:
- **Ito, Hirohide, of Konica Corporation Tokyo (JP)**
- **Kato, Mariko, of Konica Corporation Tokyo (JP)**
- **Sanpei, Takeshi, of Konica Corporation Tokyo (JP)**

(74) Representative:
**Ellis-Jones, Patrick George Armine**
**J.A. KEMP & CO.**
**14 South Square**
**Gray's Inn**
**London WC1R 5LX (GB)**

(56) References cited:
**EP-A- 0 427 892**
**FR-A- 2 058 405**

Remarks:
The file contains technical information submitted after the application was filed and not included in this specification

EP 0 540 295 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The present invention relates to a red-sensitive silver halide photographic light-sensitive material low in residual color stain with improved storage stability.

As spectral sensitizing dyes for a silver halide photographic light-sensitive material, cyanine dyes and merocyanine dyes are primarily used, and many proposals have been made for techniques to sensitize light-sensitive material spectrally from the visual wavelength region to the infrared wavelength region.

Recently, in the fields of graphic arts and medical care, the use of silver halide photographic light-sensitive materials with light sources which emit infrared light, for example, laser beams, is becoming widespread. Particularly in the field of printing, various facsimile films and color scanner films are used, and a helium-neon gas laser having an output wavelength of 632.8 nm and a light-emitting diode LED having an output wavelength of 650 to 700 nm is mainly used as a light source.

These silver halide photographic light-sensitive materials need a high spectral sensitizing capability in the red wavelength regions as well as a high storage stability and a capability of preventing residual color stain after development. Following the recent technical tendency toward a more rapid and simple processing and lower replenishing amounts, removal of residual color stains is liable to be insufficient and, as a result, the performance and commercial value of light-sensitive materials are impaired.

As conventional techniques to minimize the residual color of light-sensitive materials, U.S. Pat. Nos. 2,493,747 and 2,526,632 for example, disclose merocyanine dyes to which a water-solubilizing group is introduced; further, use of trinuclear merocyanine dyes is proposed in Japanese Pat. O.P.I. Pub. No. 143242/1990, and use of trinuclear merocyanine dyes having two water-solubilizing groups is disclosed in Japanese Pat. O.P.I. Pub. No. 171135/1991, wherein all the exemplified compounds contain carboxyl groups as water-solubilizing groups.

However, none of these techniques is sufficient in preventing residual color stains and they all have the problem that light-sensitive materials are liable to vary in sensitivity or to cause fog in the course of storage. Therefore, a new approach has been required to solve these problems.

It is an object of the invention to provide a silver halide photographic light-sensitive material having a high sensitivity in the red wavelength region, excellent in storage stability and free from residual color stains after processing.

According to the present invention there is provided a silver halide photographic light-sensitive material comprising a support having thereon a silver halide emulsion layer containing an optical sensitizing dye represented by the following Formula [1]:

Formula [1]

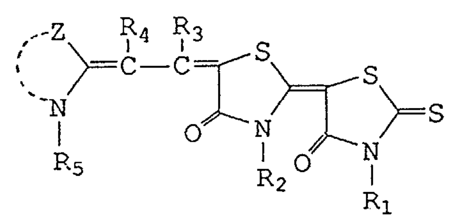

wherein Z represents a group of atoms necessary to complete a thiazole, benzothiazole, naphthothiazole, selenazole, benzoselenazole or naphthoselenazole ring; $R_1$, $R_2$, $R_3$, $R_4$ and $R_5$ are independently a hydrogen atom, substituted or unsubstituted alkyl or aryl group; provided that at least one of the groups represented by $R_1$, $R_2$, $R_3$, $R_4$ and $R_5$ is a $-(CH_2)_nSO_3M$ group, a $-C_6H_4SO_3M$ group, a $-CH_2C_6H_4SO_3M$ group, a $-CH_2-CH=CH-CH_2SO_3M$ group or a $-CH_2CH(SO_3M)CH_3$ group; and at least two of the groups represented by $R_1$, $R_2$, $R_3$, $R_4$ and $R_5$ are a $-CH_2COOH$ group, a $-(CH_2)_nCOOM$ group, a $-C_6H_4COOM$ group, a $-CH_2C_6H_4COOM$ group, a $-CH_2-CH=CH-CH_2COOM$ group, a $-(CH_2)_2SO_2NHC_6H_5$ group, and/or a $-CH_2CH_2CONH_2$ group, wherein n is an integer of 2 to 4 and M is hydrogen, an alkali metal, an ammonium group or an organic amine.

In the above Formula [1], at least three of $R_1$ to $R_5$ represent organic groups each having a water-solubilizing group; the term "water-solubilizing groups" meaning a group having a negative $\pi$ value in the Hansch method used in the so-called structure-activity correlation which deals with the relationship between structure of a compound and its bioactivity. Details of the Hansch method can be seen in J. Med. Chem., 16, 1207 (1973) and ibid. 20,304 (1979).

At least two of these water-solubilizing groups are ionizable in water and have a pKa of 4 to 11, and at least one of these water-solubilizing groups or organic groups has a pKa not larger than 4. Thus excellent spectral sensitivity is obtained and residual color stains can be reduced.

The water-solubilizing groups having a pKa of 4 to 11 are: $-(CH_2)_nCOOM$, $-C_6H_4COOM$, $-CH_2C_6H_4COOM$, $-CH_2$-

$CH=CH-CH_2COOM$, $-(CH_2)_2SO_2NHC_6H_5$, $-CH_2CH_2CONH_2$. The water-solubilizing groups having a pKa not larger than 4 are: $-(CH_2)_nSO_3M$, $-C_6H_4SO_3M$, $-CH_2-CH=CH-CH_2SO_3M$, $-CH_2CH(SO_3M)CH_3$.

In the above formulas, n represents an integer of 2 to 4, and M represents a hydrogen atom, an alkali metal atom, an ammonium group or an organic amine.

In Formula [1], examples of the alkyl substituents for $R_1$ to $R_5$ other than those mentioned above include those having up to 8 carbon atoms such as methyl, ethyl, propyl, butyl, pentyl, cyclopentyl, hexyl, cyclohexyl, heptyl and octyl groups which may be straight chained or branched (when not cyclic).

Preferred examples of the substituents for substituted alkyl groups include a halogen atom such as chlorine, bromine or fluorine atom, a hydroxyl group, a monocyclic or dicyclic aryl group having 6 to 12 carbon atoms. This aryl group, for example a phenyl group is optionally substituted by an alkyl group with 4 or less carbon atoms, a nitro group or a halogen atom, an alkoxycarbonyl group with 4 or less carbon atoms such as ethoxycarbonyl group, an acyl group having 4 or less carbon atoms such as acetyl group or benzyl group whose benzene ring is substituted by a nitro group or a halogen atom, and an alkoxy group having 4 or less carbon atoms such as methoxy or ethoxy group.

Preferred aryl groups are phenyl or naphthyl groups which are optionally substituted. Examples of the substituents include an alkyl group having 4 or less carbon atoms such as methyl, ethyl or isopropyl group.

The thiazole, benzothiazole, naphthothiazole, selenazole, benzoselenazole or naphthoselenazole ring represented by Z in Formula 1 is optionally substituted by a group usually used in a spectral sensitizing dye. Preferred substituents are, for example, the same alkyl group as that represented by any one of the above $R_1$ to $R_5$, a substituted alkyl group, an aryl group, a halogen atom and, further, a sulfonamido group such as a sulfonamido group substituted with an alkyl group having not more than 4 carbon atoms, a carbamoyl group such as a non-substituted carbamoyl, methyl carbamoyl or phenyl carbamoyl group.

The following are typical examples of the sensitizing dyes represented by Formula [1].

I-3

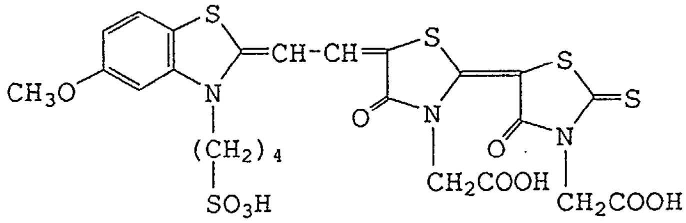

I-4

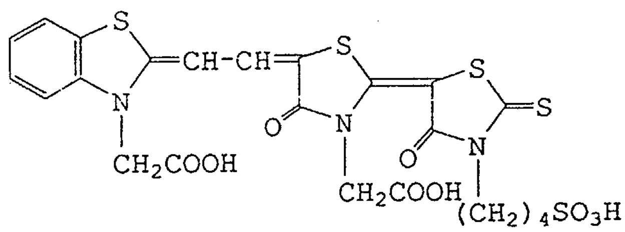

I-7

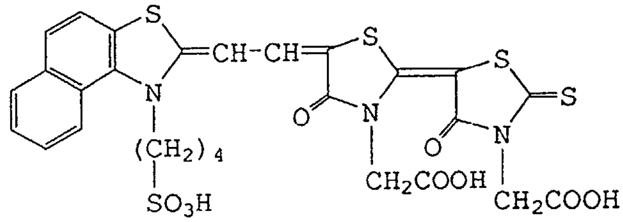

I-9

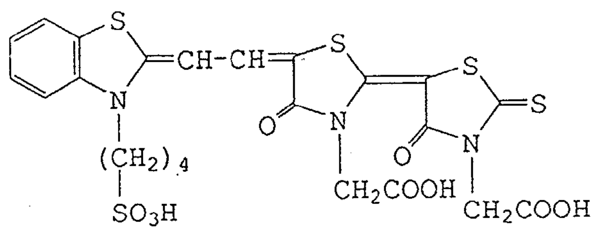

I-11

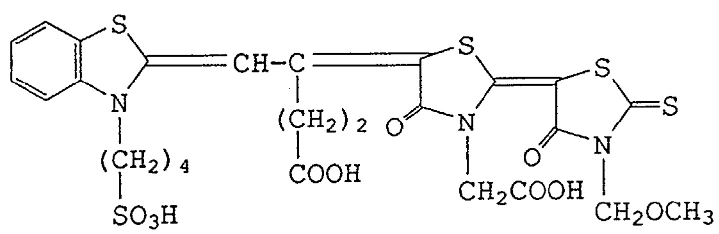

I-13

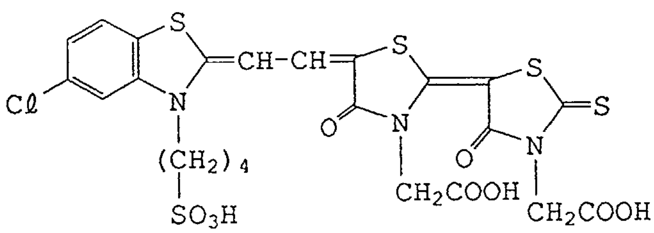

I-14

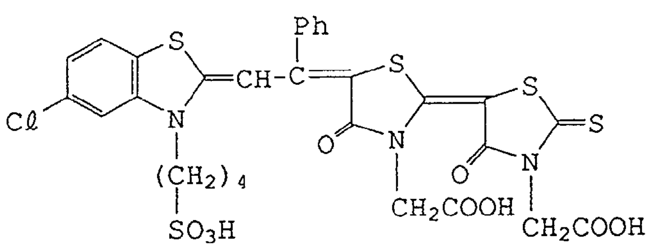

I-16

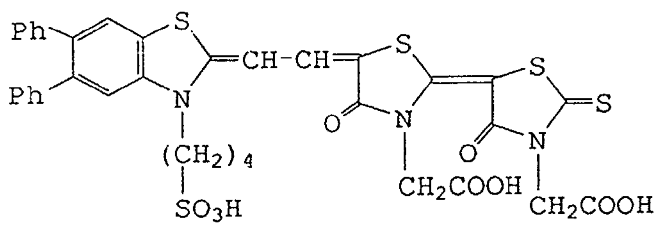

I-17

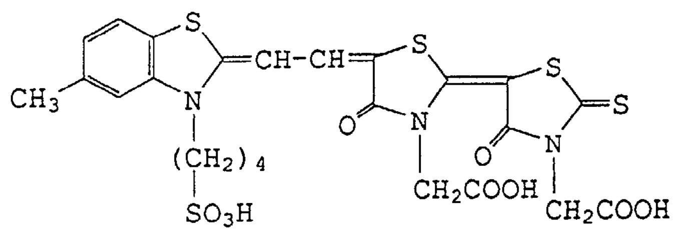

I-18

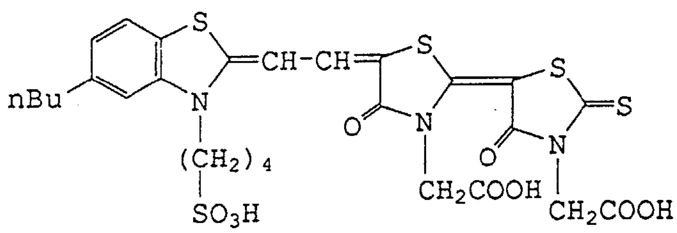

I-19

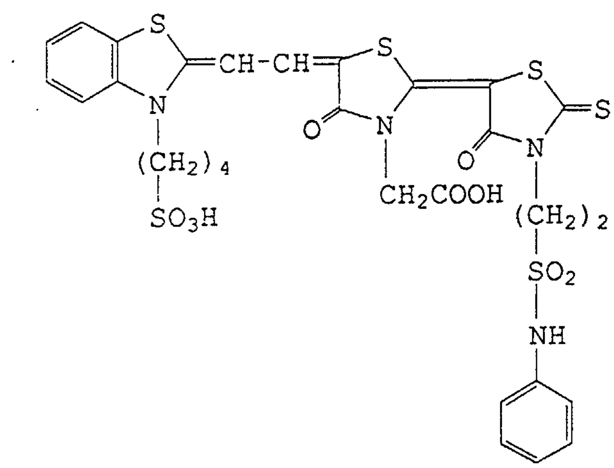

I-21

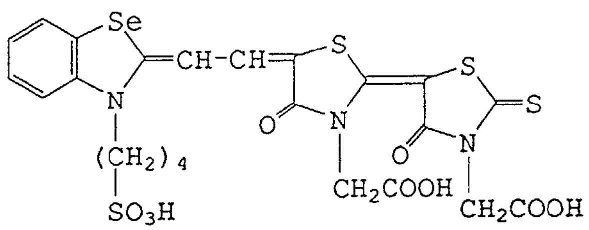

I-22

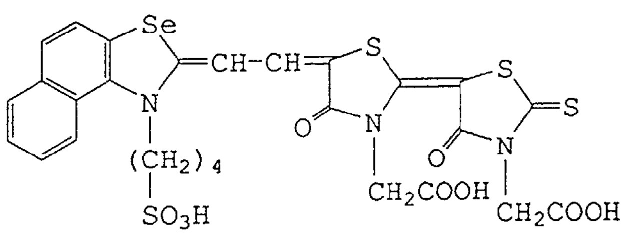

I-23

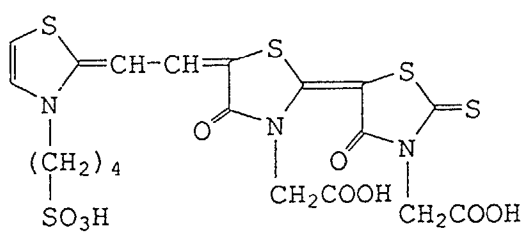

I-24

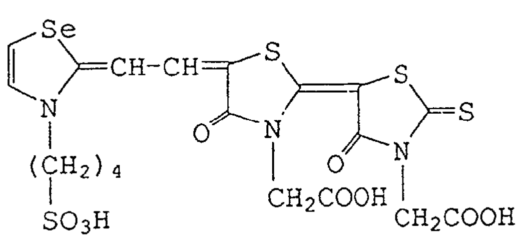

The above merocyanine dyes can be synthesized according to the methods described in U.S. Pat. Nos. 2,493,747 and 2,656,351 or methods analogous to them.

The dye of the invention is preferably added to an emulsion in an amount of $10^{-6}$ mol to $10^{-2}$ mol, more preferably $10^{-5}$ mol to $10^{-3}$ mol, per mol of silver contained in the emulsion. The dye may be added to the emulsion at any time during silver halide grain formation to coating, preferably at a time between completion of chemical ripening and coating of the emulsion.

The silver halide emulsion used in the invention (hereinafter referred to as the silver halide emulsion or simply as the emulsion) may use any of the silver halides usually employed in a silver halide emulsion, such as silver bromide, silver iodobromide, silver iodochloride, silver chlorobromide and silver chloride. But preferred are monodispersed emulsions comprising silver halide grains having a grain size less than 3 µm, especially from 0.1 to 1 µm.

The silver halide emulsion may use various techniques and additives known in the art.

For example, there may optionally be contained in the silver halide emulsion or in backing layers various chemical

sensitizers, toning agents, hardeners, surfactants, thickeners, plasticizers, lubricants, development controlling agents, UV absorbents, anti-irradiation dyes, heavy metals and matting agents in various manners. Further, the silver halide emulsion and the backing layer may contain polymer lattices.

Suitable supports for the silver halide photographic light-sensitive material of the invention include film or sheets of acetylcellulose, nitrocellulose, polyesters such as polyethylene terephthalate or polyolefines such as polyethylene; baryta paper; paper coated with polyolefine; and glass or metal sheets. These supports can optionally be subjected to surface treatment when necessary.

The silver halide photographic light-sensitive material of the invention can be processed, after exposure, by various of the usual methods.

Suitable black-and-white developers are alkaline solutions containing developing agents such as hydroxy benzenes, aminophenols or aminobenzenes and may contain sulfites, carbonates, bromides or iodides of an alkali metal.

**EXAMPLES**

Example 1

Preparation of Silver Halide Emulsion

A silver chloroiodobromide emulsion, comprising 62 mol% silver chloride, 0.5 mol% silver iodide, the other was silver bromide, was prepared by the double-jet method.

To the emulsion were added potassium hexabromorhodate and potassium hexachloroiridate in amounts of $8 \times 10^{-8}$ mol/mol Ag and $8 \times 10^{-7}$ mol/mol Ag, respectively, during the mixing process from the time when grains had grown to 5% of the intended final average size to the time when the grains had grown to the intended final average size.

The emulsion obtained was desalted by the usual flocculation method using a modified gelatin treated with phenylisocyanate and then dispersed in gelatin. Subsequently, fungicides (A), (B) and (C) described later were added thereto, so that an emulsion comprising cubic monodispersed grains having an average grain size of 0.30 μm and a coefficient of variation of 10% were obtained.

The coefficent of variation is defined as $\sigma/\bar{r} \times 100(\%)$, in which $\sigma$ is an standard deviation of grain sized distribution and $\bar{r}$ is an averaged grain size.

After adding citric acid and potassium bromide, the emulsion was chemically ripened at 60 °C to the maximum sensitivity by the addition of chloroauric acid and sodium thiosulfate, then the ripening was stopped by adding 1-phenyl-5-mercaptotetrazole and 4-hydroxy-6-methyl-1,3,3a,7-tetrazaindene in amounts of 50 mg/mol AgX and 1 g/mol AgX, respectively.

Preparation of Emulsion Coating Solution

To this emulsion were added separately the comparative compounds and the exemplified compounds of the invention in amounts of $2 \times 10^{-4}$ mol per mol of silver halide as shown in Table 1. After adding sodium dodecylbenzenesulfonate as a surfactant and sodium 2,4-dichloro-6-hydroxytriazine as a hardener in the usual amounts, the coating solution so-obtained was uniformly coated on a subbed polyethylene terephthalate film so as to give a silver coating weight of 4 g/m$^2$ and a gelatin coating weight of 3 g/m$^2$.

The coated sample was exposed for $10^{-6}$ seconds through an optical wedge by use of a He-Ne laser as light source. Then, it was processed in a Photomechanical Automatic Processor GR-27 (Konica Corp.) using the following developer and fixer under the following conditions. The processed sample was subjected to sensitometry using an Optical Densitometer Konica PD A-65. In Table 1, the sensitivity is given in a value relative to the sensitivity of sample 1 which was set at 100, and the residual color density is a residual color density measured with the above densitometer immediately after the processing. A residual color density of 0.05 in the table is at a level of almost no residual color, and a value of 0.09 or above is at a level at which practical problems arise.

[A]

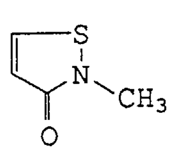

[B]

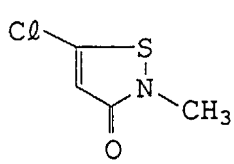

[C]

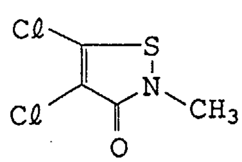

Comparison 1

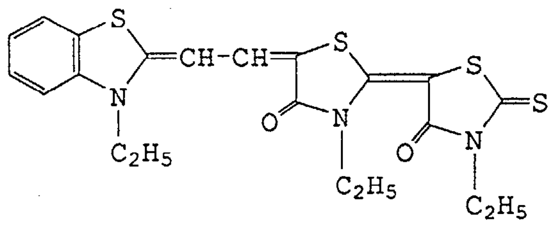

Comparison 2

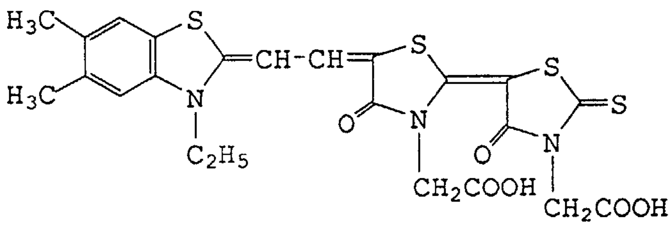

Comparison 3

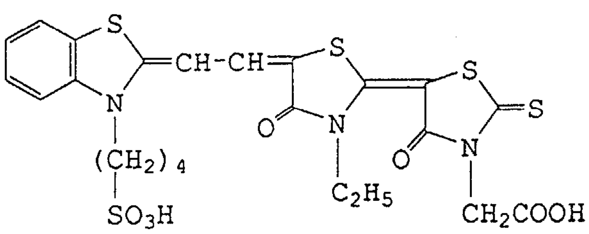

Comparison 4

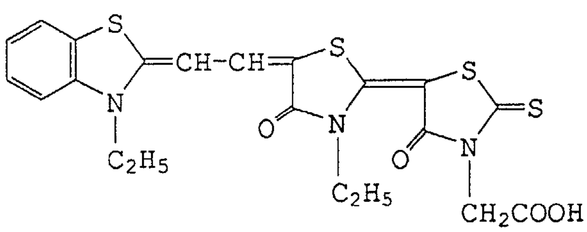

Processing Conditions

The processing conditions were as follows:

Developer

(Composition A)

| | |
|---|---|
| Deionized water | 150 ml |
| Disodium ethylenediaminetetracetate | 2 g |
| Diethylene glycol | 50 g |
| Potassium sulfite (55% W/V aqueous solution) | 100 ml |
| Potassium carbonate | 50 g |
| Hydroquinone | 15 g |
| 5-Methylbenzotriazole | 200 ml |
| 1-Phenyl-5-mercaptotetrazole | 30 mg |
| Potassium hydroxide (an amount to make the pH 10.5 at use) | |
| Potassium bromide | 4.5 g |

(Composition B)

| | |
|---|---|
| Deionized water | 3 ml |
| Diethylene glycol | 50 g |
| Disodium ethylenediaminetetracetate | 25 mg |
| Acetic acid (90% aqueous solution) | 0.3 ml |
| 5-Nitroindazole | 110 mg |
| 1-Phenyl-3-pyrazolidone | 500 mg |

As the use of developper, composition A and composition B were dissolved in this order in 500 ml of water, and then water was added to make the total volume 1 liter.

| Fixer | |
|---|---|
| (Composition A) | |
| Ammonium thiosulfate (72.5% W/V aqueous solution) | 230 ml |
| Sodium sulfite | 9.5 g |
| Sodium acetate trihydrate | 15.9 g |
| Boric acid | 6.7 g |
| Sodium citrate dihydrate | 2 g |

(continued)

| Fixer | |
|---|---|
| (Composition A) | |
| Acetic acid (90% W/W aqueous solution) | 8.1 ml |
| (Composition B) | |
| Deionized water | 17 ml |
| Sulfuric acid (50% W/W aqueous solution) | 5.8 g |
| Aluminium sulfate (8.1% W/W aqueous solution as $Al_2O_3$) | 26.5 g |

At the use of developper, composition A and composition B were dissolved in this order in 500 ml of water, and then water was added to make the total volume 1 liter. The pH of this fixer was about 4.3.

| Processing Conditions | | |
|---|---|---|
| Process | Temperature | Time |
| Developing | 34 °C | 15 sec |
| Fixing | 34 °C | 15 sec |
| Washing | ordinary temp. | 10 sec |
| Drying | 40 °C | 10 sec |

Each processing time includes the crossover time till the start of a following process.

Table 1

| Sample No. | Sentitizing Dye | Sensitivity | Residual Color | Remarks |
|---|---|---|---|---|
| 1 | Comparison(1) | 100 | 0.10 | Comparison |
| 2 | Comparison(2) | 80 | 0.09 | Comparison |
| 3 | Comparison(3) | 90 | 0.09 | Comparison |
| 4 | Comparison(4) | 100 | 0.10 | Comparison |
| 6 | Exemplified I-3 | 105 | 0.05 | Invention |
| 7 | Exemplified I-4 | 90 | 0.06 | Invention |
| 9 | Exemplified I-7 | 110 | 0.06 | Invention |
| 11 | Exemplified I-13 | 105 | 0.06 | Invention |
| 13 | Exemplified I-17 | 90 | 0.05 | Invention |
| 14 | Exemplified I-18 | 105 | 0.05 | Invention |
| 15 | Exemplified I-19 | 105 | 0.05 | Invention |

As is apparent from Table 1, the samples of the invention have sensitivities equal to those of the comparative samples and much higher residual color preventing capabilities.

Example 2

Dyes of the invention and those for comparison were added as shown in Table 2 to the emulsion ripened under the optimum conditions in Example 1.

Preparation of Emulsion Layer Coating Solution

To this emulsion were added, per mol of silver halide, 4 g of hydroquinone, 2 g of potassium bromide, 10 g of polymer latex P1 of the following structure, 250 mg of 5-nitroindazole and 2 g of styrene-maleic acid copolymer and, further, usual amounts of 1N aqueous solution of sodium hydroxide, sodium dodecylbenzenesulfonate as an auxiliary

and sodium salt of 2,4-dichloro-6-hydroxyazine as a hardener.

Preparation of Coating Solution for Emulsion Protective Layer

As coating weights per $m^2$, there were added 5.5 mg of 1-phenyl-4-hydroxymethyl-3-pyrazolidone and 25 mg of monodispersed silica having an average particle size of 3 μm to an aqueous solution of 1.1 g of gelatin. Further, there were added an aqueous solution of sodium 1-decyl-2-(3-isopentyl)succinate-2-sulfonate, S-1 and citric acid as coating aids, and formalin as a hardener.

Preparation of Backing Layer Coating Solution

As coating weights per $m^2$, there were added, to an aqueous solution containing 2.0 g of gelatin, 100 mg of the following water-soluble dye III-1, 25 mg of III-2, 100 mg of III-3, 100 mg of III-4, 350 mg of polymer latex P-1, 60 mg of styrene-maleic acid copolymer, 150 mg of colloidal silica, sodium dodecylbenzenesulfonate as a coating aid, glyoxal, and 55 mg of E-2.

Preparation of Coating Solution for Backing Protective Layer

As coating weights per $m^2$, there were added 12 mg of sodium 1-decyl-2-(3-isopentyl)succinate-2-sulfonate and a dispersion of monodispersed polymethylmethacrylate with an average particle size of 5.5 μm to an aqueous solution containing 1.0 g of gelatin. After stirring, there were further added glyoxal as a hardener, and sodium salt of 2,4-dichloro-6-hydroxytriazine.

Preparation of Samples

After performing a corona dischage treatment on one side of a polyethylene terephthalate film support at an energy of 15 W/$m^2$·min, the backing layer coating solution and the coating solution for protecting the backing layer were coated thereon. After performing a corona dischage treatment on the other side of the support at an energy of 15 W/$m^2$·min, an emulsion layer was formed thereon so as to give a silver coating weight of 4.0 mg/$m^2$ and a gelatin coating weight of 1.7 mg/$m^2$, followed by the formation of a protecting layer for the emulsion layer.

Comparison A

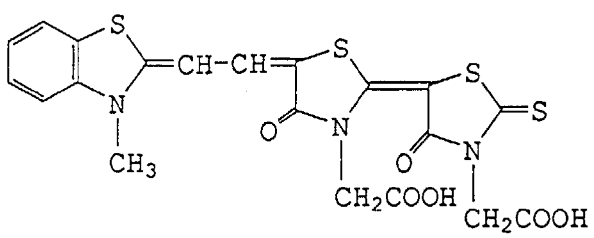

Comparison B

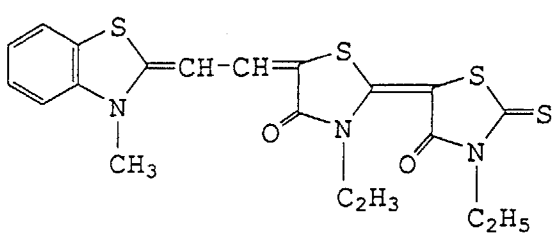

Compound III-1

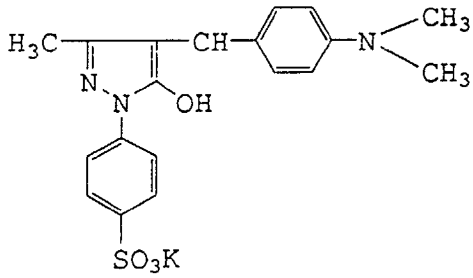

Compound III-2

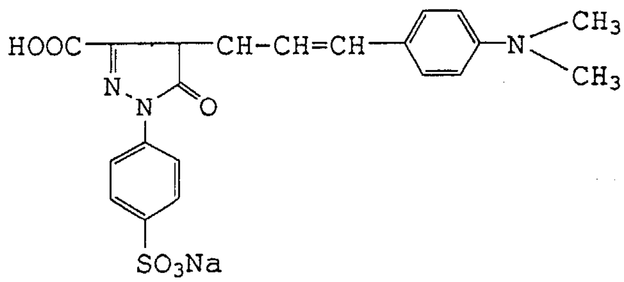

Compound III-3

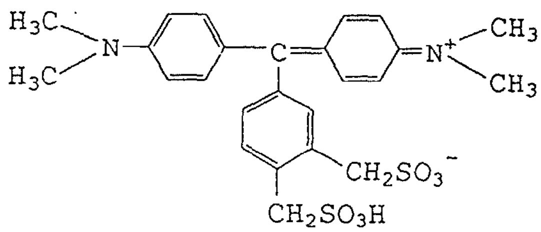

S-1

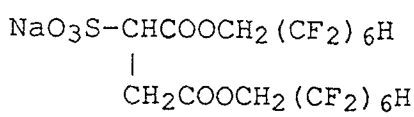

P-1

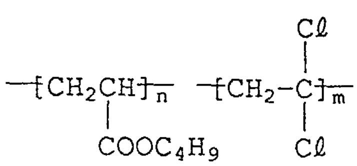

(n:m=50:50)

E-2

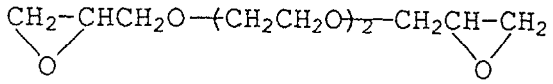

Accelerated Aging Test

The light-sensitive material sample obtained as above was divided into two parts. One part was stored for 3 days under conditions of 23 °C and 50% RH for use as a fresh sample. The other part was conditioned for 8 hours under conditions of 23 °C and 50% RH and enclosed in a moisture-proof bag in a lapped form. Then, it was subjected to forced deterioration at 55 °C for 3 days, so that a sample for the accelerated aging test was obtained.

These samples were each exposed for $10^{-5}$ second through an optical wedge and an interference filter of 488 nm and then were processed as in Example 1. The sensitivity and the residual color density in the unexposed portion of these samples shown in Table 2 were determined in the same manner as in Example 1. The sensitivity is expressed in a value relative to the sensitivity of sample 22 stored for 3 days at 23 °C and 50% RH, which was set at 100.

Table 2

| Sample No. | Exemplified Dye | Amount Added ( $\times 10^{-4}$ mol/mol AgX) | Fresh | | Aged | | Remarks |
|---|---|---|---|---|---|---|---|
| | | | Sensitivity | Residual Color | Sensitivity | Color Residual | |
| 16 | Comparison(A) | 1.0 | 50 | 0.07 | 100 | 0.08 | Comparison |
| 17 | Comparison(A) | 2.0 | 70 | 0.09 | 135 | 0.10 | Comparison |
| 18 | Comparison(A) | 3.0 | 80 | 0.10 | 150 | 0.11 | Comparison |
| 19 | Comparison(B) | 1.0 | 70 | 0.08 | 130 | 0.09 | Comparison |
| 20 | Comparison(B) | 2.0 | 100 | 0.10 | 180 | 0.12 | Comparison |
| 21 | Comparison(B) | 3.0 | 120 | 0.12 | 200 | 0.14 | Comparison |
| 22 | Exemplified I-3 | 1.0 | 100 | 0.05 | 105 | 0.06 | Invention |
| 23 | Exemplified I-3 | 2.0 | 120 | 0.05 | 125 | 0.06 | Invention |
| 24 | Exemplified I-3 | 3.0 | 130 | 0.06 | 140 | 0.06 | Invention |
| 25 | Exemplified 9 | 1.0 | 95 | 0.05 | 100 | 0.05 | Invention |
| 26 | Exemplified 9 | 2.0 | 115 | 0.05 | 120 | 0.06 | Invention |
| 27 | Exemplified 9 | 3.0 | 125 | 0.05 | 130 | 0.06 | Invention |
| 28 | Exemplified 21 | 1.0 | 95 | 0.05 | 95 | 0.06 | Invention |
| 29 | Exemplified 21 | 2.0 | 120 | 0.06 | 120 | 0.07 | Invention |
| 30 | Exemplified 21 | 3.0 | 130 | 0.07 | 135 | 0.08 | Invention |

As apparent from Table 2, the samples of the invention have a smaller sensitivity change due to aging and have

less residual color.

## Claims

1. A silver halide photographic light-sensitive material comprising a support having thereon a silver halide emulsion layer containing an optical sensitizing dye represented by the following formula I:

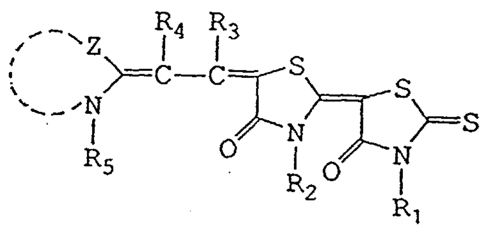

(I)

wherein Z is a group of atoms necessary to complete a thiazole ring, a benzothiazole ring, a naphthothiazole ring, a selenazole ring, a benzoselenazole ring or a naphthoselenazole ring; $R_1$, $R_2$, $R_3$, $R_4$ and $R_5$ are independently a hydrogen atom, a substituted or unsubstituted alkyl group or a substituted or unsubstituted aryl group, provided that at least one of the groups represented by $R_1$, $R_2$, $R_3$, $R_4$ and $R_5$ is a $-(CH_2)_nSO_3M$ group, a $-C_6H_4SO_3M$ group, a $-CH_2C_6H_4SO_3M$ group, a $-CH_2-CH=CH-CH_2SO_3M$ group or a $-CH_2CH(SO_3M)CH_3$ group; and at least two of the groups represented by $R_1$, $R_2$, $R_3$, $R_4$ and $R_5$ are a $-CH_2COOH$ group, a $-(CH_2)_nCOOM$ group, a $-C_6H_4COOM$ group, a $-CH_2C_6H_4COOM$ group, a $-CH_2-CH=CH-CH_2COOM$ group, a $-(CH_2)_2SO_2NHC_6H_5$ group, and/or a $-CH_2CH_2CONH_2$ group, wherein n is an integer of 2 to 4 and M is hydrogen, an alkali metal, an ammonium group or an organic amine.

2. The light-sensitive material of claim 1, wherein the ring represented by Z is a benzothiazole ring or a naphthothiazole ring.

3. The light-sensitive material of claim 1 or 2, wherein said silver halide emulsion layer comprises silver halide grains having a silver chloride content of not less that 30 mol%.

4. The light-sensitive material of claim 3, wherein said silver halide emulsion layer comprises silver halide grains having a silver chloride content of from 50 mol % to 90 mol %.

5. The light sensitive material of any one of the preceding claims wherein the substituted or unsubstituted alkyl group represented by $R_1$, $R_2$, $R_3$, $R_4$ or $R_5$ is a straight or branch chained or cyclic alkyl group with up to eight carbon atoms.

6. The light sensitive material of any one of the preceding claims wherein the substituted or unsubstituted alkyl group represented by $R_1$, $R_2$, $R_3$, $R_4$ or $R_5$ is a methyl, ethyl, propyl, butyl, pentyl, cyclopentyl, hexyl, cyclohexyl, heptyl or octyl group.

7. The light sensitive material of any one of the preceding claims wherein the dye is added to the silver halide emulsion layer in an amount of $10^{-6}$ mol to $10^{-2}$ mol per mole of silver contained in the emulsion.

8. The light sensitive material of claim 7 wherein the dye is added to the silver halide emulsion layer in an amount of $10^{-5}$ mol to $10^{-3}$ mol per mole of silver contained in the emulsion.

9. The light sensitive material of any one of the preceding claims wherein the silver halide emulsion used in the silver halide emulsion layer is a monodispersed emulsion comprising silver halide grains having a grain size less than 3μm.

10. The light sensitive material of claim 9 wherein the silver halide emulsion layer comprises silver halide grains having a grain size of from 0.1 to 1μm.

**Patentansprüche**

1. Lichtempfindliches photographisches Silberhalogenid-Aufzeichnungsmaterial mit einem Schichtträger und einer darauf aufgetragenen Silberhalogenidemulsionsschicht mit einem optischen Sensibilisierungsfarbstoff der folgenden Formel I:

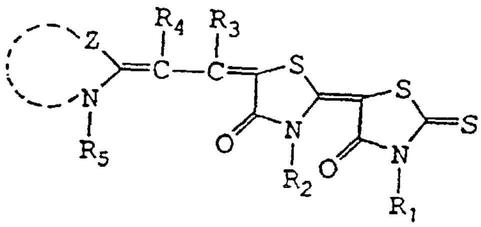

(I)

worin bedeuten:

Z eine zur Vervollständigung eines Thiazol-, Benzothiazol-, Naphthothiazol-, Selenazol-, Benzoselenazol- oder Naphthoselenazolrings erforderliche Gruppe von Atomen;

$R_1$, $R_2$, $R_3$, $R_4$ und $R_5$ jeweils unabhängig voneinander ein Wasserstoffatom oder eine gegebenenfalls substituierte Alkyl- oder Arylgruppe, wobei gilt, daß mindestens eine der durch $R_1$, $R_2$, $R_3$, $R_4$ und $R_5$ dargestellten Gruppen aus einer $-(CH_2)_nSO_3M$-Gruppe, einer $-C_6H_4SO_3M$-Gruppe, einer $-CH_2C_6H_4SO_3M$-Gruppe, einer $-CH_2-CH=CH-CH_2SO_3M$-Gruppe oder einer $-CH_2CH(SO_3M)CH_3$-Gruppe besteht, und mindestens zwei der durch $R_1$, $R_2$, $R_3$, $R_4$ und $R_5$ dargestellten Gruppen eine $-CH_2COOH$-Gruppe, eine $-(CH_2)_nCOOM$-Gruppe, eine $-C_6H_4COOM$-Gruppe, eine $-CH_2C_6H_4COOM$-Gruppe, eine $-CH_2-CH=CH-CH_2COOM$-Gruppe, eine $-(CH_2)_2SO_2NHC_6H_5$-Gruppe und/oder eine $-CH_2CH_2CONH_2$-Gruppe bedeuten, wobei n für eine ganze Zahl von 2 bis 4 steht und M ein Wasserstoff, ein Alkalimetall, eine Ammoniumgruppe oder ein organisches Amin darstellt.

2. Lichtempfindliches Aufzeichnungsmaterial nach Anspruch 1, wobei es sich bei dem durch Z dargestellten Ring um einen Benzothiazol- oder Naphthothiazolring handelt.

3. Lichtempfindliches Aufzeichnungsmaterial nach Anspruch 1 oder 2, wobei die Silberhalogenidemulsionsschicht Silberhalogenidkörnchen eines Silberchloridgehalts von nicht weniger als 30 Mol-% enthält.

4. Lichtempfindliches Aufzeichnungsmaterial nach Anspruch 3, wobei die Silberhalogenidemulsionsschicht Silberhalogenidkörnchen eines Silberchloridgehalts von 50 Mol-% bis 90 Mol-% enthält.

5. Lichtempfindliches Aufzeichnungsmaterial nach einem der vorhergehenden Ansprüche, wobei es sich bei der durch $R_1$, $R_2$, $R_3$, $R_4$ oder $R_5$ dargestellten substituierten oder unsubstituierten Alkylgruppe um eine gerad- oder verzweigtkettige oder cyclische Alkylgruppe mit bis zu 8 Kohlenstoffatomen handelt.

6. Lichtempfindliches Aufzeichnungsmaterial nach einem der vorhergehenden Ansprüche, wobei es sich bei der durch $R_1$, $R_2$, $R_3$, $R_4$ oder $R_5$ dargestellten substituierten oder unsubstituierten Alkylgruppe um eine Methyl-, Ethyl-, Propyl-, Butyl-, Pentyl-, Cyclopentyl-, Hexyl-, Cyclohexyl-, Heptyl- oder Octylgruppe handelt.

7. Lichtempfindliches Aufzeichnungsmaterial nach einem der vorhergehenden Ansprüche, wobei der Farbstoff der Silberhalogenidemulssionsschicht in einer Menge von $10^{-6}$ Mol bis $10^{-2}$ Mol pro Mol an in der Emulsion enthaltenem Silber zugesetzt ist.

8. Lichtempfindliches Aufzeichnungsmaterial nach Anspruch 7, wobei der Farbstoff der Silberhalogenidemulsionsschicht in einer Menge von $10^{-5}$ Mol bis $10^{-3}$ Mol pro Mol an in der Emulsion enthaltenem Silber zugesetzt ist.

9. Lichtempfindliches AufzeichnungBmaterial nach einem der vorhergehenden Ansprüche, wobei die in der Silberhalogenidemulsionsschicht verwendete Silberhalogenidemulsion aus einer monodispersen Emulsion mit Silberhalogenidkörnchen einer Korngröße unter 3 $\mu m$ besteht.

**10.** Lichtempfindliches Aufzeichnungsmaterial nach Anspruch 9, wobei die Silberhalogenidemulssionsschicht Silberhalogenidkörnchen einer Korngröße von 0,1 bis 1 µm enthält.

## Revendications

**1.** Matériau photographique sensible à la lumière à base d'halogénure d'argent comprenant un support recouvert d'une couche d'une émulsion d'halogénure d'argent contenant un colorant de sensibilisation optique ayant la formule suivante I :

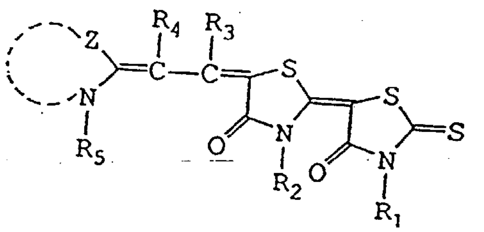

(I)

dans laquelle Z est un groupe d'atomes nécessaires pour former un noyau thiazole, un noyau benzothiazole, un noyau naphthothiazole, un noyau sélénazole, un noyau benzosélénazole ou un noyau naphthosélénazole; $R_1$, $R_2$, $R_3$, $R_4$, et $R_5$, étant indépendamment un atome d'hydrogène, un groupe alkyle substitué ou non substitué ou un groupe aryle substitué ou non substitué, sous réserve qu'au moins un des groupes représentés par $R_1$, $R_2$, $R_3$, $R_4$, et $R_5$ soit un groupe $-(CH_2)_nSO_3M$, un groupe $-C_6H_4SO_3M$, un groupe $-CH_2C_6H_4SO_3M$, un groupe-$CH_2$-$CH=CH-CH_2SO_3M$ ou un groupe $-CH_2CH(SO_3M)CH_3$; et au moins deux des groupes représentés par $R_1$, $R_2$, $R_3$, $R_4$, et $R_5$ représentent un groupe $-CH_2COCH$, un groupe $-(CH_2)_nCOOM$, un groupe $-C_6H_4COOM$, un groupe $-CH_2C_6H_4COOM$, un groupe $-CH_2-CH=CH-CH_2COOM$, un groupe $-(CH_2)_2SO_2NHC_6H_5$, et/ou un groupe $-CH_2CH_2CONH_2$, dans lesquels n est un nombre entier de 2 à 4 et M est un atome d'hydrogène, un métal alkalin, un groupe d'amonium ou une amine organique.

**2.** Matériau sensible à la lumière selon la revendication 1, dans laquelle le noyau représenté par Z est un noyau benzothiazole ou noyau naphthothiazole.

**3.** Matériau sensible à la lumière selon la revendication 1 ou 2, dans lequel la couche d'émulsion d'halogénure d'argent comprend des grains d'halogénure d'argent ayant une teneur en chlorure d'argent qui n'est pas inférieure à 30 moles %.

**4.** Matériau sensible à la lumière selon la revendication 3, dans laquelle la couche d'émulsion d'halogénure d'argent comprend des grains d'halogénure d'argent ayant une teneur en chlorure d'argent d'environ 50 moles % à 90 moles %.

**5.** Matériau sensible à la lumière selon l'une quelconque des revendications précédentes, dans lequel le groupe alkyle substitué ou non substitué représenté par $R_1$, $R_2$, $R_3$, $R_4$, ou $R_5$ est un groupe alkyle, linéaire ou ramifié, ou cyclique ayant jusqu'à 8 atomes de carbone.

**6.** Matériau sensible à la lumière selon l'une quelconque des revendications précédentes, dans lequel le groupe alkyle, substitué ou non substitué, représenté par $R_1$, $R_2$, $R_3$, $R_4$, ou $R_5$ est un groupe méthyle, éthyle, propyle, butyle, pentyle, cyclopentyle, héxyle, cyclohéxyle, heptyle ou octyle.

**7.** Matériau sensible à la lumière selon l'une quelconque des revendications précédentes, dans lequel le colorant est ajouté à la couche d'émulsion d'halogénure d'argent en une proportion de $10^{-6}$ mole à $10^{-2}$ par mole d'argent contenu dans l'émulsion.

**8.** Matériau sensible à la lumière selon la revendication 7, dans lequel le colorant est ajouté à la couche d'émulsion d'halogénure d'argent en une proportion de $10^{-5}$ mole à $10^{-3}$ mole par mole d'argent contenu dans l'émulsion.

**9.** Matériau sensible à la lumière selon l'une quelconque des revendications précédentes, dans lequel l'émulsion d'halogénure d'argent utilisée dans la couche d'émulsion d'halogénure d'argent est une émulsion monodispersée

comprenant des grains d'halogénure d'argent ayant une taille de grains inférieure à 3µm.

**10.** Matériau sensible à la lumière selon la revendication 9, dans lequel la couche d'émulsion d'halogénure d'argent comprend des grains d'halogénure d'argent ayant une taille de grains d'environ 0,1 à 1µm.